# EUROPÄISCHE PATENTANMELDUNG

(11) **EP 1 128 181 A2**
(43) Veröffentlichungstag der Anmeldung: **29.08.2001**
(21) Anmeldenummer: 01101570.8
(22) Anmeldetag: 25.01.2001
(51) Int. Cl.: G01N 27/407, G01N 27/417

(54) **Verfahren zur Bestimmung des Sauerstoffgehaltes eines Messgases**

(30) Priorität: 23.02.2000 DE 10008441
(71) Anmelder: Heraeus Electro-Nite International N.V., 3530 Houthalen (BE)
(72) Erfinder: Lenaerts, Silvia, Dr., 2600 Berchem (BE); Sandow, Klaus-Peter, 86854 Amberg (DE)
(74) Vertreter: Kühn, Hans-Christian

(57) **Zusammenfassung**

Die Erfindung betrifft ein Verfahren zur Bestimmung des Sauerstoffgehaltes eines Messgases mit einem Sensor sowie die Verwendung des Sensors nach dem Verfahren. Es stellt sich das Problem, ein Verfahren bereitzustellen, mit welchem Lambda in einem breiten Bereich von 0,8 bis ca. 20 möglichst genau und in einfacher Weise bestimmt werden kann. Das Problem wird für das Verfahren gelöst, indem die Bestimmung des Sauerstoffgehaltes des Messgases durch die erste und die zweite Messzelle in serieller Weise erfolgt und dass der Sauerstoffgehalt des Messgases durch die zweite Messzelle in einem Lambda-Bereich von 0.8 bis 1.4 bestimmt wird und durch die erste Messzelle in einem Lambda-Bereich von ≥ 1 bis 20 bestimmt wird.

## Beschreibung

Die Erfindung betrifft ein Verfahren zur Bestimmung des Sauerstoffgehaltes eines Messgases mit einem Sensor sowie die Verwendung des Sensors nach dem Verfahren. Der Sensor weist dabei einen Sauerstoffionen-leitenden Festelektrolyten auf, welcher das Messgas von einem Referenzgas trennt, und welcher mindestens eine Referenzelektrode auf seiner Referenzgasseite und eine erste und eine zweite Messelektrode auf seiner Messgasseite aufweist und die erste Messelektrode von einer diffusionslimitierenden Schicht bedeckt ist, wobei eine erste Messzelle, die aus der bedeckten ersten Messelektrode, dem Festelektrolyten und der Referenzelektrode gebildet ist, amperometrisch nach dem Grenzstromprinzip betrieben wird und parallel dazu eine zweite Messzelle, die aus der zweiten Messelektrode, dem Festelektrolyten und der Referenzelektrode gebildet ist, potentiometrisch betrieben wird.

Die DE 197 57 112 A1 beschreibt einen gattungsgemäßen Gassensor zur Messung von Sauerstoff und/oder der Luft/Kraftstoff Verhältniszahl Lambda und mindestens einem weiteren gasförmigen Bestandteil in Gasgemischen. Die Messelektroden auf der Messgasseite und die Referenzelektroden auf der Referenzgasseite eines Sauerstoffionen-leitenden Festelektrolyten liefern hier gleichzeitig mindestens zwei, auf gleichen oder unterschiedlichen Messprinzipien basierende Messsignale, denen unterschiedliche gasförmige Bestandteile zugrunde liegen. Insbesondere zeigt Figur 7 einen Schnitt durch einen rohrförmig ausgebildeten Gassensor zur gleichzeitigen potentiometrischen Sauerstoff- und amperometrischen Sauerstoff- und Stickoxidbestimmung. Eine gezielte Verwertung der einzelnen Sensorsignale bei bestimmten Gaszusammensetzungen ist nicht vorgesehen.

Die DE 43 20 881 A1 offenbart einen Sensor zur Bestimmung eines Lambda-Wertes in einem Gasgemisch, bei welchem eine beheizte Lambda-Sonde mit sprungförmiger Sensor-Charakteristik und eine weitere beheizte Lambda-Sonde mit breitbandiger Sensor-Charakteristik kombiniert sind. Das Ausgangssignal der Lambda-Sonde mit sprungförmiger Sensor-Charakteristik wird zur Kalibrierung der Lambda-Sonde mit breitbandiger Sensor-Charakteristik verwendet. Die hier offenbarte Lambda-Sonde mit sprungförmiger Sensor-Charakteristik macht bei Lambda gleich 1 einen Widerstandssprung, während die Lambda-Sonde mit breitbandiger Sensor-Charakteristik einen sich kontinuierlich und vorzugsweise im Bereich von Lambda 0,8 bis 1,2 linear ändernden Widerstand aufweist. Als sensitive Materialien für die beiden resistiven Lambda-Sonden werden sauerstoffsensitive Schichten verwendet. Eine Bestimmung von Lambda größer 1,2 ist mit dieser Sensoranordnung nicht möglich.

Es stellt sich das Problem, ein Verfahren bereitzustellen, mit welchem Lambda in einem breiten Bereich von 0,8 bis ca. 20 möglichst genau und in einfacher Weise bestimmt werden kann.

Das Problem wird für das Verfahren gelöst, indem die Bestimmung des Sauerstoffgehaltes des Messgases durch die erste und die zweite Messzelle in serieller Weise erfolgt und dass der Sauerstoffgehalt des Messgases durch die zweite Messzelle in einem Lambda-Bereich von 0.8 bis 1.4 bestimmt wird und durch die erste Messzelle in einem Lambda-Bereich von ≥ 1 bis 20 bestimmt wird. Eine Verwendung beziehungsweise Auswertung des Ausgangssignals einer Messzelle erfolgt demnach nur, wenn ein bestimmtes Lambda im Messgas vorliegt. Es handelt sich also um eine "Serienschaltung" der Messbereiche, durch die eine genaue Messung von Lambda im Bereich von 0.8 bis ca. 20 ermöglicht wird und die Messgenauigkeit bei hohem wie bei niedrigem Lambda hoch ist. Durch eine elektronische Steuereinheit kann diese Auswahl des entsprechenden Ausgangssignals in einfacher Weise erfolgen. So kann beispielsweise bei einem Lambda von 0.8 bis 1.4 das Ausgangssignal der zweiten, potentiometrisch betriebenen Messzelle für diverse Regel- oder Steuerungsmaßnahmen bei Verbrennungsvorgängen, bevorzugt in einem Kraftfahrzeug, verwertet werden, während bei einem Lambda von ≥ 1 bis ca. 20 das Ausgangssignal der ersten Messzelle dazu verwendet wird. In einem Lambda-Bereich von ≥ 1 bis 1.4, in welchem sowohl das Ausgangssignal der ersten wie auch das Ausgangssignal der zweiten Messzelle verwendbar ist, kann die Auswertung sowohl in serieller Weise als auch in paralleler Weise erfolgen.

Dabei ist es von Vorteil, wenn in einem Lambda-Bereich von ≥ 1 bis 1.4 ein Abgleich zwischen dem potentiometrischen Ausgangssignal der zweiten Messzelle und dem amperometrischen Ausgangssignal der ersten Messzelle erfolgt. Dieser Abgleich der Ausgangssignale kann mit Hilfe einer elektronischen Steuereinheit bei einem festgelegten Lambda-Wert oder in bestimmten zeitlichen Intervallen erfolgen. Der Abgleich der Ausgangssignale mit Hilfe einer elektronischen Steuereinheit kann aber, beispielsweise in einem Kraftfahrzeug, auch durch bestimmte Motordaten ausgelöst werden.

Die Genauigkeit der Messung wird noch erhöht, wenn die zweite Messzelle regelmäßig mit Hilfe eines in einer elektronischen Steuereinheit hinterlegten Kalibrierwertes beziehungsweise Ausgangssignal-Sollwertes kalibriert wird, wenn sich das Messgas bei einem Lambda-Wert von 1 befindet. Anschließend kann die erste Messzelle mit Hilfe der zweiten Messzelle umso genauer kalibriert werden. Eine zusätzliche Erfassung der aktuellen Temperatur der Messzellen ist bei diesen Kalibriervorgängen vorteilhaft, um rein temperaturbedingte Verschiebungen der Ausgangssignale feststellen und berücksichtigen zu können.

Erfindungsgemäß ist die Verwendung eines Sensors mit einem Sauerstoffionen-leitenden Festelektrolyten, welcher ein Messgas von einem Referenzgas trennt, und mindestens einer Referenzelektrode auf der Referenzgasseite und einer ersten und einer zweiten Messelektrode auf der Messgasseite des Festelektrolyten, wobei die Messelektroden unabhängig voneinander angeordnet sind und die erste Messelektrode von einer diffusionslimitierenden Schicht bedeckt ist, zur Durchführung des Verfahrens geeignet.

Aber auch eine erfindungsgemäße Verwendung eines Sensors mit einem Sauerstoffionen-leitenden Festelektrolyten, welcher ein Messgas von einem Referenzgas trennt, und mindestens einer Referenzelektrode auf der Referenzgasseite und einer ersten und einer zweiten Messelektrode auf der Messgasseite des Festelektrolyten, wobei die Messelektroden unabhängig voneinander angeordnet sind und die erste Messelektrode von einer diffusionslimitierenden Schicht bedeckt ist, und mit einem vom Festelektrolyten elektrisch isoliert angeordneten Temperaturfühler und / oder elektrischen Heizelement, ist zur Durchführung des erfindungsgemäßen Verfahrens hervorragend geeignet.

Die folgenden Figuren zeigen beispielhaft einen zur Durchführung des erfindungsgemäßen Verfahrens verwendbaren Sauerstoffsensor. Die nachfolgenden zwei Beispiele geben Möglichkeiten an, den Sauerstoffsensor aus oben genannten Figuren für das erfindungsgemäße Verfahren einzusetzen. Es wird darauf hingewiesen, dass die in den Beispielen gewählten speziellen Lambda-Werte aus den drei oben angegebenen Lambda-Bereichen ( 0.8 bis 1.4; ≥ 1 bis ca. 20 und ≥ 1 bis 1.4) lediglich zur Verdeutlichung des Erfindungsgedankens herausgegriffen worden sind.
- Fig. 1:: Sauerstoffsensor mit je einer potentiometrisch und einer amperometrisch betriebenen Messzelle im Längsschnitt
- Fig. 2:: Sauerstoffsensor aus Fig. 1 im Querschnitt mit einem zusätzlichen Heizelement

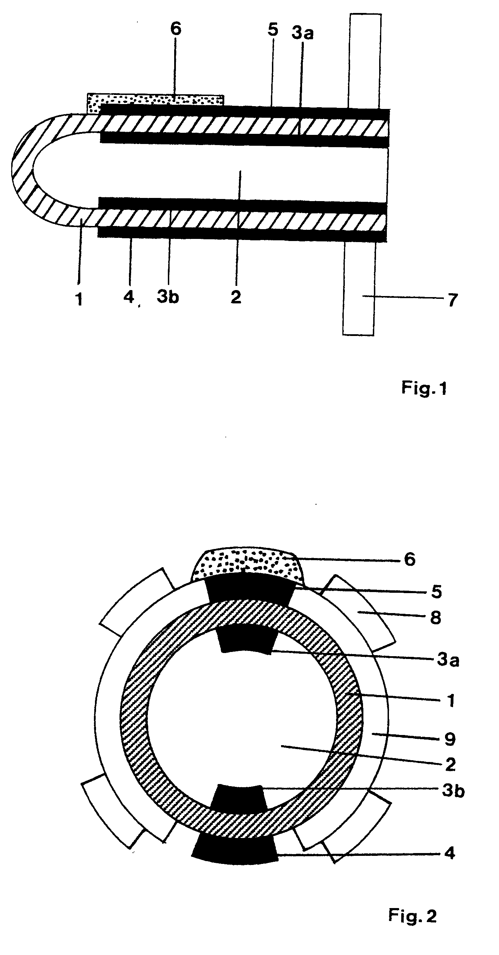

Fig. 1 zeigt einen Sauerstoffsensor mit einem einseitig geschlossenen, röhrchenförmigen Sauerstoffionen-leitenden Festelektrolyten 1, der die Referenzgasseite 2 von der Messgasseite trennt. Diese Trennung ist hier durch eine Wandung 7, in welche der Sauerstoffsensor mit einem nicht dargestellten Gehäuse eingebaut wird, nur angedeutet. Auf der Referenzgasseite 2 des Festelektrolyten 1, der beispielsweise aus Yttrium-dotiertem ZrO₂ gebildet ist, befinden sich die Referenzelektroden 3a und 3b. Auf der Messgasseite des Festelektrolyten 1 befindet sich die Messelektrode 4 ( hier inklusive elektrischer Zuleitung dargestellt), die mit der Referenzelektrode 3b und dem Festelektrolyten 1 eine Messzelle bildet, welche potentiometrisch betrieben zur Bestimmung von Lambda verwendet wird. Auf der Messgasseite des Festelektrolyten 1 befindet sich außerdem die Messelektrode 5 ( hier inklusive elektrischer Zuleitung dargestellt), die mit einer diffusionslimitierenden Schicht 6 bedeckt ist und die mit der Referenzelektrode 3a und dem Festelektrolyten 1 eine weitere Messzelle bildet, die amperometrisch betrieben zur Bestimmung von Lambda verwendet wird.

Fig. 2 zeigt den Sauerstoffsensor aus Fig. 1 im Querschnitt. Zusätzlich zu den bereits unter Fig. 1 beschriebenen Elementen ist ein elektrisches Heizelement 8, beispielsweise aus Platin, vorhanden. Das Heizelement 8 ist durch eine elektrisch isolierende Schicht 9, beispielsweise aus Aluminiumoxid, vom Festelektrolyten 1 isoliert angeordnet. Zusätzlich kann ein hier nicht dargestellter Temperaturfühler, beispielsweise auf der Referenzgasseite 2, vorgesehen werden.

### Beispiel 1:

Eine erfindungsgemäße Durchführung des Verfahrens kann erfolgen, indem ein Sauerstoffsensor gemäß Fig. 1 beziehungsweise Fig. 2 in das Abgassystem eines Kraftfahrzeuges eingebaut wird. Beim Start des Motors wird der Sauerstoffsensor mit Hilfe des Heizelementes 8 auf Betriebstemperatur aufgeheizt und das Lambda des Abgases mit beiden Messzellen bestimmt. Eine elektronische Steuereinheit überprüft anhand der Ausgangssignale der beiden Messzellen, ob sich Lambda im Messgas oberhalb oder unterhalb 1 befindet und verwendet das Ausgangssignal der potentiometrisch betriebenen Messzelle, wenn Lambda ≤ 1.1 beziehungsweise das Ausgangssignal der amperometrisch betriebenen Messzelle, wenn Lambda > 1.1, beispielsweise zur Steuerung der Kraftstoff-Zufuhr des Kraftfahrzeuges. Bei einem kontinuierlichen Anstieg des Lambda-Wertes im Abgas wechselt die Verwendung des Ausgangssignals bei Lambda 1.1 von der potentiometrischen betriebenen Messzelle zur amperometrisch betriebenen Messzelle.

### Beispiel 2:

Das Beispiel 1 kann durch folgende zusätzliche Verfahrensschritte optimiert werden. Wird mit der potentiometrischen Messzelle ein Lambda von 1.1 gemessen, so wird das aktuelle Ausgangssignal der amperometrischen Messzelle des Sauerstoffsensors kalibriert. Anhand einer in der elektronischen Steuereinheit hinterlegten Lambda-Strom-Tabelle wird der zu einem Lambda von 1.1 gehörige Ausgangssignal-Sollwert der amperometrisch betriebenen Messzelle ( hier ein Strom in A) ermittelt. Der Ausgangssignal-Sollwert wird dann mit dem gemessenen Ausgangssignal verglichen und bei einer Abweichung eine Kalibrierung der amperometrisch betriebenen Messzelle vorgenommen.

## Patentansprüche

1. Verfahren zur Bestimmung des Sauerstoffgehaltes eines Messgases mit einem Sensor, der einen Sauerstoffionen-leitenden Festelektrolyten aufweist, welcher das Messgas von einem Referenzgas trennt, und welcher mindestens eine Referenzelektrode auf seiner Referenzgasseite und eine erste und eine zweite Messelektrode auf seiner Messgasseite aufweist und die erste Messelektrode von einer diffusionslimitierenden Schicht bedeckt ist, wobei eine erste Messzelle, die aus der bedeckten ersten Messelektrode, dem Festelektrolyten und der Referenzelektrode gebildet ist, amperometrisch nach dem Grenzstromprinzip betrieben wird und parallel dazu eine zweite Messzelle, die aus der zweiten Messelektrode, dem Festelektrolyten und der Referenzelektrode gebildet ist, potentiometrisch betrieben wird, dadurch gekennzeichnet, dass die Bestimmung des Sauerstoffgehaltes des Messgases durch die erste ( 3a; 1; 5; 6 ) und die zweite Messzelle ( 3b; 1; 4 ) in serieller Weise erfolgt und dass der Sauerstoffgehaltes des Messgases durch die zweite Messzelle ( 3b; 1; 4) in einem Lambda-Bereich von 0.8 bis 1.4 bestimmt wird und durch die erste Messzelle ( 3a; 1; 5; 6 ) in einem Lambda-Bereich von ≥ 1 bis 20 bestimmt wird.

2. Verfahren nach Anspruch 1, dadurch gekennzeichnet, dass in einem Lambda-Bereich von ≥ 1 bis 1.4 ein Abgleich zwischen dem potentiometrischen Ausgangssignal der zweiten Messzelle ( 3b; 1; 4 ) und dem amperometrischen Ausgangssignal der ersten Messzelle ( 3a; 1; 5; 6 ) erfolgt.

3. Verfahren nach Anspruch 2, dadurch gekennzeichnet, dass der Abgleich der Ausgangssignale mit Hilfe einer elektronischen Steuereinheit bei einem festgelegten Lambda-Wert erfolgt.

4. Verfahren nach Anspruch 2, dadurch gekennzeichnet, dass der Abgleich der Ausgangssignale mit Hilfe einer elektronischen Steuereinheit in bestimmten zeitlichen Intervallen erfolgt.

5. Verfahren nach Anspruch 2, dadurch gekennzeichnet, dass der Abgleich der Ausgangssignale mit Hilfe einer elektronischen Steuereinheit durch bestimmte Motordaten ausgelöst wird.

6. Verfahren nach mindestens einem der Ansprüche 1 bis 5, dadurch gekennzeichnet, dass die zweite Messzelle ( 3b; 1; 4 ) mit Hilfe eines in einer elektronischen Steuereinheit hinterlegten Kalibrierwertes in einem Lambda-Bereich von 0.8 bis 1 kalibriert wird.

7. Verfahren nach mindestens einem der Ansprüche 1 bis 6, dadurch gekennzeichnet, dass die erste Messzelle ( 3a; 1; 5; 6 ) mit Hilfe der zweiten Messzelle ( 3b; 1; 4 ) kalibriert wird.

8. Verwendung eines Sensors mit einem Sauerstoffionen-leitenden Festelektrolyten (1), welcher ein Messgas von einem Referenzgas trennt, und mindestens einer Referenzelektrode ( 3a; 3b) auf der Referenzgasseite ( 2) und einer ersten ( 5 ) und einer zweiten Messelektrode (4) auf der Messgasseite des Festelektrolyten (1), wobei die Messelektroden (4; 5 ) unabhängig voneinander angeordnet sind und die erste Messelektrode ( 5 ) von einer diffusionslimitierenden Schicht ( 6 ) bedeckt ist, zur Durchführung des Verfahrens nach mindestens einem der Ansprüche 1 bis 7.

9. Verwendung eines Sensors mit einem Sauerstoffionen-leitenden Festelektrolyten (1), welcher ein Messgas von einem Referenzgas trennt, und mindestens einer Referenzelektrode ( 3a; 3b) auf der Referenzgasseite ( 2 ) und einer ersten ( 5 ) und einer zweiten Messelektrode (4) auf der Messgasseite des Festelektrolyten (1), wobei die Messelektroden (4; 5) unabhängig voneinander angeordnet sind und die erste Messelektrode ( 5) von einer diffusionslimitierenden Schicht ( 6 ) bedeckt ist, und mit einem isoliert vom Festelektrolyten (1) angeordneten Temperaturfühler und /oder elektrischen Heizelement ( 8 ) zur Durchführung des Verfahrens nach mindestens einem der Ansprüche 1 bis 7.
